# FASCICULE DE BREVET EUROPEEN

(11) **EP 3 666 432 B1**
(45) Date de publication et mention de la délivrance du brevet: **03.11.2021**
(21) Numéro de dépôt: 19212196.0
(22) Date de dépôt: 28.11.2019
(51) Int. Cl.: B23B 49/02

(54) **DISPOSITIF DE SOLIDARISATION D'UN DISPOSITIF DE PERÇAGE À UNE GRILLE DE PERÇAGE COMPRENANT UN MOYEU EXPANSIBLE À BILLES**
VORRICHTUNG ZUR FESTEN VERBINDUNG EINER BOHRVORRICHTUNG MIT EINEM BOHRGITTER, DAS EINEN KUGELSPANNSATZ UMFASST
DEVICE FOR SECURING A BORING DEVICE TO A BORING GRATE COMPRISING AN EXPANDABLE BALL HUB

(30) Priorité: 11.12.2018 FR 1872722
(43) Date de publication de la demande: 17.06.2020
(73) Titulaire: ETABLISSEMENTS GEORGES RENAULT, 44800 Saint Herblain (FR)
(72) Inventeur: BOS, Rémi, 31700 CORNEBARRIEU (FR)
(74) Mandataire: Vidon Brevets & Stratégie

(56) Documents cités:
- WO-A1-2008/133586
- US-A- 5 395 187
- US-A- 5 482 411
- US-A1- 2004 223 821
- US-A1- 2012 328 382

## Description

### 1. Domaine de l'invention

Le domaine de l'invention concerne un dispositif de solidarisation d'un dispositif de perçage à une grille de perçage munie d'une pluralité d'alésages de positionnement selon le préambule de la revendication 1. Un tel dispositif de solidarisation est connu de US 5 395 187 A.

### 2. Art antérieur

Dans le domaine de l'aéronautique, des perçages sont couramment réalisés dans les structures avionnées au cours de la fabrication des avions.

Les emplacements des perçages à réaliser sont généralement définis au moyen de grilles de perçage.

Une grille de perçage se présente sous la forme d'une plaque traversée par une pluralité d'alésages de positionnement.

Une telle grille est destinée à être placée de manière fixe à proximité d'un élément à percer, ceci dans une position particulière prédéterminée de sorte que la position des alésages de positionnement corresponde à des emplacements où des perçages doivent être pratiqués dans l'élément à percer.

Une fois la grille de perçage ainsi mise en place, on vient fixer un dispositif de perçage à l'un des alésages de positionnement puis on y pratique un trou dans l'élément à percer. Le dispositif de perçage est ensuite solidarisé à un autre alésage de la grille pour pratiquer un autre trou dans l'élément à percer. Le dispositif de perçage est ainsi successivement solidarisé à différents alésages de positionnement de la grille de sorte à pratiquer une pluralité de perçages dans l'élément à percer.

Les dispositifs de perçage généralement mis en œuvre sont des dispositifs de perçage à avance automatique (comprenant un unique moteur pour entrainer une broche de perçage en translation et en rotation selon un même axe) ou des dispositifs de perçage à paramètres de coupe contrôlés (comprenant un moteur d'avance et un moteur de rotation pour entrainer une broche de perçage en translation et en rotation selon un même axe).

La solidarisation d'un dispositif de perçage à la grille est réalisée au moyen d'un dispositif de solidarisation comprenant un moyeu expansible.

Un tel moyeu expansible comprend :
- une bague expansible cylindrique traversée par un alésage intérieur conique ménagé le long d'un axe longitudinal de la bague expansible ;
- un cône d'expansion logé à l'intérieur de l'alésage conique de la bague expansible et dont le contour périphérique extérieur est complémentaire de l'alésage conique,
- des moyens d'entrainement en translation du cône d'expansion à l'intérieur de l'alésage conique selon l'axe longitudinal entre au moins :
   - une position de libération dans laquelle le cône est déplacé du côté de plus fort diamètre de l'alésage conique de la bague expansible si bien que celle-ci se trouve dans un état relâché dans lequel son diamètre extérieur est inférieur à celui des alésages de positionnement de la grille de sorte qu'elle puisse y être introduite ou en être extraite ;
   - une position de verrouillage dans laquelle le cône est déplacé du côté de plus faible diamètre de l'alésage conique de la bague expansible si bien que celle-ci se trouve dans un état expansé dans lequel son diamètre extérieur est augmenté de sorte à maintenir le dispositif de perçage solidaire de la grille de perçage par friction de la bague expansible contre les parois internes de l'alésage de positionnement dans lequel elle se trouve.

Le déplacement en translation du cône d'expansion vis-à-vis de la bague expansible est obtenu par un vérin, en général pneumatique. Ce vérin est disposé de façon perpendiculaire au cône d'expansion et pour l'entrainer par l'intermédiaire d'un dispositif de transformation de mouvement tel que des galets roulant dans une glissière inclinée par rapport aux axes du cône et du vérin ou encore un palonnier.

L'effort axial appliqué sur le cône d'expansion engendre une pression de contact entre le moyeu expansible et l'alésage de positionnement dans lequel il est logé en position de verrouillage. Cette pression de contact et les frottements associés doivent être suffisants pour s'opposer au couple de réaction et aux efforts de poussée selon l'axe de perçage transmis à la perceuse au cours d'une opération de perçage et garantir que le dispositif de perçage est correctement solidarisé à la grille. La fiabilité de cette solidarisation est donc dépendante de la force axiale générée par le vérin.

Dans le cas d'une solidarisation insuffisante, le dispositif de perçage peut glisser par rapport à la grille au cours d'une opération de perçage. Un tel glissement peut avoir des répercutions sur la qualité du perçage, en particulier sur sa profondeur si le dispositif de perçage recule par rapport à la grille au cours d'une opération de perçage. Ceci n'est pas acceptable dans la mesure où les tolérances géométriques imposées dans le secteur aéronautique sont souvent faibles.

Le risque de voir le dispositif de perçage glisser par rapport à la grille au cours d'une opération de perçage est d'autant plus grand que le matériau à percer est dur, que l'outil coupant est usé (dans ces deux cas, la poussée et le couple transmis à la perceuse en cours de perçage sont plus importants) et que le perçage est réalisé avec lubrification.

Pour éviter qu'un tel déplacement du dispositif de perçage se produise, il est connu d'augmenter la taille du vérin ou d'utiliser une pression plus importante ce qui peut avoir des inconvénients en terme d'encombrement ou fatigue mécanique des composants.

Une autre solution pour éviter le glissement du dispositif de perçage par rapport à la grille de perçage est de mettre en œuvre des systèmes de retenue complémentaire mécanique comprenant un système à baïonnette ¼ de tour solidaire du dispositif de perçage prévue pour venir coopérer avec des vis épaulées solidaires de la grille de perçage.

Un tel système présente l'inconvénient d'être encombrant et ne pas être compatible avec un entraxe de grille serré.

Les dispositifs de solidarisation des dispositifs de perçage aux grilles de perçages peuvent donc encore être améliorés notamment pour :
- limiter le risque de voir le dispositif de perçage glisser par rapport à la grille de perçage au cours d'une opération de perçage, ainsi que les inconvénients inhérents à un tel glissement ;
- réduire les efforts devant être développés pour maintenir le dispositif de solidarisation solidaire d'une grille de perçage.

### 3. Objectifs de l'invention

L'invention a notamment pour objectif d'apporter une solution efficace à au moins certains de ces différents problèmes.

En particulier, selon au moins un mode de réalisation, un objectif de l'invention est de fournir un dispositif de solidarisation d'un dispositif de perçage à une grille de perçage qui permet de réaliser des trous avec des tolérances géométriques faibles.

Notamment, l'invention a pour objectif, selon au moins un mode de réalisation, de fournir un tel dispositif de solidarisation qui permet d'assurer une bonne répétabilité sur la profondeur d'une pluralité de perçages.

Un autre objectif de l'invention, selon au moins un mode de réalisation, est de fournir un tel dispositif de solidarisation qui permet d'éviter que le dispositif de perçage ne glisse, en particulier ne recule, par rapport à la grille de perçage au cours d'une opération de perçage.

Notamment, l'invention a pour objectif, selon au moins un mode de réalisation, de fournir un tel dispositif de solidarisation qui soit compact.

Un autre objectif de l'invention est, selon au moins un mode de réalisation, de fournir un tel dispositif de solidarisation qui nécessite le déploiement d'efforts relativement réduits pour assurer un maintien en position efficace d'un dispositif de perçage par rapport à une grille de perçage au cours d'une opération de perçage.

Un autre objectif de l'invention est, selon au moins un mode de réalisation, de fournir un tel dispositif de solidarisation qui soit compact et/ou simple de conception et/ou robuste.

### 4. Présentation de l'invention

Pour ceci, l'invention propose un dispositif de solidarisation d'un dispositif de perçage à une grille de perçage traversée par une pluralité d'alésages de positionnement selon la revendication 1, ledit dispositif de solidarisation comprenant :
- un corps ;
- des premiers moyens de solidarisation dudit corps audit dispositif de perçage ;
- des deuxièmes moyens de solidarisation dudit corps à ladite grille de perçage, lesdits deuxièmes moyens de solidarisation comprenant un moyeu expansible, ledit moyeu expansible comprenant :
   - une bague expansible traversée par un alésage conique ménagé le long d'un axe longitudinal de ladite bague expansible ;
   - un cône d'expansion logé à l'intérieur dudit alésage conique de ladite bague expansible et dont le contour périphérique extérieur est complémentaire dudit alésage conique,
   - des moyens d'entrainement en translation dudit cône d'expansion à l'intérieur dudit alésage conique selon ledit axe longitudinal entre au moins :
      - une position de libération dans laquelle ledit cône est déplacé du côté de plus fort diamètre dudit alésage conique de ladite bague expansible si bien que celle-ci se trouve dans un état relâché dans lequel son diamètre extérieur est inférieur à celui desdits alésages de positionnement de ladite grille de sorte qu'elle puisse y être introduite ou en être extraite ;
      - une position de verrouillage dans laquelle ledit cône est déplacé du côté de plus faible diamètre dudit alésage conique de ladite bague expansible si bien que celle-ci se trouve dans un état expansé dans lequel son diamètre extérieur est augmenté de sorte à maintenir ledit dispositif de solidarisation solidaire de ladite grille de perçage par friction de ladite bague expansible contre les parois internes d'un desdits alésages de positionnement de ladite grille.

Selon l'invention, ledit moyeu expansible comprend en outre des billes de verrouillage chacune logée dans un orifice ménagé dans ladite bague d'expansion, ledit cône d'expansion agissant sur lesdites billes de verrouillage pour les placées dans :
- une position de déblocage, prise lorsque ledit cône se trouve dans sa position de libération, dans laquelle elles ne forment pas saillie à la surface périphérique extérieure de ladite bague expansible ;
- une position de blocage, prise lorsque ledit cône se trouve dans sa position de verrouillage, dans laquelle elles forment saillie à la surface périphérique extérieure de ladite bague expansible de sorte à pouvoir se loger dans un logement périphérique de blocage solidaire desdits alésages de positionnement de ladite grille.

Ainsi, l'invention consiste à mettre en œuvre un moyeu expansible à billes pour assurer la solidarisation d'un dispositif de perçage à une grille de perçage.

La mise en œuvre de billes, qui viennent se loger dans un logement périphérique solidaire d'un alésage de positionnement d'une grille de perçage permet de bloquer simplement mais efficacement en translation le dispositif de perçage par rapport à la grille. Ainsi, le dispositif de perçage ne peut pas se déplacer en translation selon l'axe de perçage par rapport à la grille de perçage, notamment il ne peut pas reculer. On garantit ainsi le respect de tolérances géométriques faibles qui sont généralement imposées, et en particulier la répétabilité de la profondeur de perçages successifs.

La technique selon l'invention permet ainsi, par la mise en œuvre d'une solution compacte et simple, de réaliser des perçages de qualité.

Selon une variante possible, lesdites billes sont logées dans des rainures longitudinales ménagées à la surface dudit cône d'expansion.

Ceci permet d'assurer un guidage convenable des billes vers les orifices de la bague expansible.

Selon une variante possible, chacune desdites rainures comprend un premier étage et un deuxième étage séparés par une rampe inclinée, le fond dudit premier étage étant plus proche de l'axe longitudinal dudit cône d'expansion que le fond lesdites billes se trouvant contre ledit premier étage dans ladite position de déblocage et contre ledit deuxième étage dans ladite position de blocage.

Ceci permet de garantir un maintien en position de blocage des billes de verrouillage et d'éviter un retour intempestif en position de déblocage.

Selon une variante possible, lesdites rainures sont non débouchantes.

Ceci permet d'éviter l'introduction de saletés entre le cône d'expansion et la bague expansible, et ainsi d'assurer un bon fonctionnement du moyeu expansible à billes.

Selon une variante possible, lesdits alésages de positionnement sont ménagés dans ladite grille de perçage.

Selon une variante possible, un dispositif de solidarisation selon l'invention comprend des bagues de guidage destinées à être solidarisées à ladite grille de perçage et traversées par lesdits alésage de positionnement.

Ceci permet de préserver la grille du matage qui pourrait être occasionné à la surface des alésages de positionnement sous l'effet des efforts engendrés par le verrouillage du moyeu expansible.

Selon une variante possible, lesdits logements périphériques de blocage sont ménagés dans ladite grille ou dans lesdites bagues de guidage.

Selon une variante possible, ledit corps comprend une butée destinée en venir en appui contre une surface de ladite grille de perçage ou contre une surface desdites bagues de guidage orientée vers ledit dispositif de solidarisation.

Ceci permet d'assurer un positionnement répétable du corps du dispositif de solidarisation par rapport à la grille et ainsi d'améliorer la qualité des perçages réalisés.

Selon une variante possible, ladite bague de guidage comprend un épaulement de forme complémentaire d'un logement ménagé dans lesdits alésages de positionnement de ladite grille.

Dans ce cas, ledit épaulement est préférentiellement ménagé du côté de ladite grille opposé à celui orientée vers ledit dispositif de solidarisation.

Selon une variante possible, le passage dudit cône de sa position de libération à sa position de verrouillage se fait en direction de la surface de ladite grille de perçage orientée vers ledit dispositif de solidarisation, ou inversement.

Selon une variante possible, lesdits moyens d'entrainement en translation dudit cône d'expansion comprennent un vérin, ledit vérin comprenant un cylindre ménagé à l'intérieur dudit corps et un piston monté mobile en translation à l'intérieur dudit cylindre selon l'axe de translation dudit cône d'expansion, ledit cône d'expansion étant solidaire en translation dudit piston.

La mise en œuvre d'un tel vérin coaxial présente l'avantage de procurer un dispositif de solidarisation nettement plus compact qu'avec la mise en œuvre d'un vérin perpendiculaire.

Selon une variante possible, ledit vérin est à double effet.

Ceci permet de mieux contrôler le verrouillage et le déverrouillage du moyeu expansible à billes.

Selon une variante possible, ledit cylindre dudit vérin comprend une chambre de verrouillage placé d'un côté du piston et destinée à être alimenté pour déplacer ledit cône d'expansion dans sa position de verrouillage et une chambre de libération placé de l'autre côté du piston et destinée à être alimenté pour déplacer ledit cône d'expansion dans sa position de libération, la surface de la face du piston située dans ladite chambre de déverrouillage étant supérieure à la surface de la face dudit piston située dans ladite chambre de verrouillage.

Ceci permet, au cours du déverrouillage du moyeu expansible, de contrer l'effet du grippage du cône d'expansion dans la bague expansible.

Selon une variante possible, un dispositif selon l'invention comprend des moyens de régulation desdits moyens d'entrainement en translation dudit cône d'expansion, lesdits moyens de régulation étant configurés de sorte que la vitesse de déplacement en translation imprimé audit cône d'expansion par lesdits moyens d'entrainement soit supérieure au cours de son passage de ladite position de libération à ladite position de verrouillage à celle au cours de son passage de ladite position de verrouillage à ladite position de libération.

Ceci permet de garantir que l'outil coupant soit sorti de la grille de perçage avant que le dispositif de désolidarisation ne puisse être désolidarisé de la grille de perçage. On évite ainsi de casser l'outil coupant lors de la désolidarisation du dispositif de perçage.

Selon une variante possible, un dispositif de solidarisation selon l'invention est traversé de part en part par un canon de perçage.

### 5. Description des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
[Fig 1] la figure 1 illustre une vue en perspective d'un dispositif de solidarisation selon l'invention ;
[Fig 2] la figure 2 illustre une vue en perspective et en coupe du dispositif de la figure 1 ;
[Fig 3] la figure 3 illustre une vue en perspective et en coupe du dispositif de la figure 2 ;
[Fig 4] la figure 4 illustre une vue en coupe transversale d'un cône d'expansion d'un dispositif selon l'invention ;
[Fig 5] la figure 5 illustre une vue en coupe transversale d'un dispositif selon l'invention, coopérant avec une grille de perçage, dont le cône d'expansion est en position de libération, les billes de verrouillage sont en position de déblocage et la bague expansible est en état relâché ;
[Fig 6] la figure 6 illustre un détail de la figure 5 ;
[Fig 7] la figure 7 illustre une vue en coupe partielle du dispositif de la figure 5 ;
[Fig 8] la figure 8 illustre une vue en coupe transversale d'un dispositif selon l'invention, coopérant avec une grille de perçage, dont le cône d'expansion est en position de verrouillage, les billes de verrouillage sont en position de blocage et la bague expansible est en état expansé ;
[Fig 9] la figure 9 illustre un détail de la figure 8 ;
[Fig 10] la figure 10 illustre une vue en coupe partielle du dispositif de la figure 8 ;
[Fig 11] la figure 11 illustre le maintien d'une bille de verrouillage dans un orifice d'une bague expansible ;
[Fig 12] la figure 12 illustre un dispositif de solidarisation selon l'invention fixé à l'extrémité d'un dispositif de perçage.

### 6. Description de modes de réalisation particuliers

### 6.1. Architecture

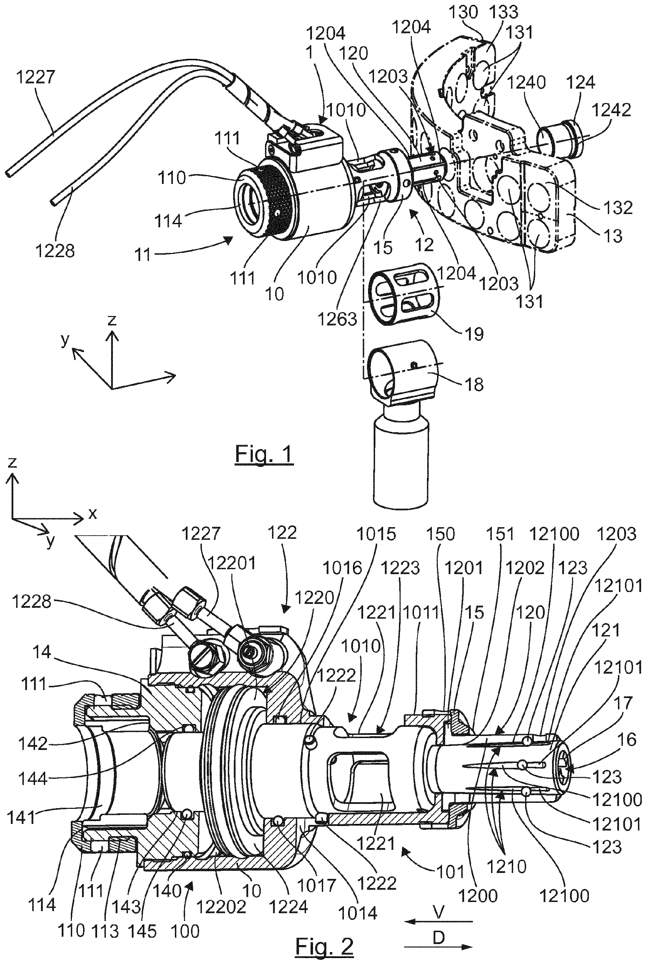

On présente en relation avec les figures 1 à 9 un exemple de mode de réalisation d'un dispositif de solidarisation d'un dispositif de perçage à une grille de perçage comprenant selon l'invention un moyeu expansible à billes.

Un tel dispositif de solidarisation peut être mis en œuvre pour assurer la solidarisation de tout type de dispositif de perçage (ou perceuse) à une grille de perçage au rang desquels figurent notamment, mais non exclusivement, les perceuses à paramètres de couple contrôlés et les perceuses à avance automatique.

En référence à la figure 1, un tel dispositif de solidarisation 1 comprend un corps 10 comprenant à une première extrémité des premiers moyens de solidarisation 11 à un dispositif de perçage, et à son extrémité opposée des deuxièmes moyens de solidarisation 12 à une grille de perçage 13.

Ainsi que cela est représenté, une grille de perçage 13 comprend classiquement une plaque 130 traversée par une pluralité d'alésage de positionnement 131. Une telle plaque 130 peut être plane, incurvée ou présenter tout autre forme adaptée au perçage de l'élément à percer. Elle présente une surface 132 orientée du côté du dispositif de perçage, c'est-à-dire du côté du dispositif de solidarisation, et une surface 133 opposée orientée du côté d'un élément à percer.

Les premiers moyens de solidarisation 11 du dispositif à une perceuse comprennent un écrou moleté 110 apte à être vissé sur une portion taraudé 113 du corps 10 ou plus précisément d'un bouchon 14 qui sera décrit plus en détail par la suite. L'écrou 110 peut être serré grâce à une clé à ergot se logeant dans les trous 111.

L'écrou moleté 110 présente un épaulement 114.

Les deuxièmes moyens de solidarisation 12 du dispositif à une grille de perçage comprennent un moyeu expansible à billes qui sera décrit plus en détail par la suite.

Le corps 10 comprend une première portion 100 de fort diamètre prolongée par une deuxième portion 101 de plus faible diamètre.

La première portion 100 est traversée par un alésage 1220. Cet alésage 1220 est ouvert sur l'extérieur à son extrémité antérieure et refermé au moyen d'un bouchon 14 vissé dans le corps 10.

Le bouchon 14 porte un joint torique 140 pour assurer une fermeture hermétique de l'alésage 1220.

Le bouchon 14 est apte à loger une bague intérieure 141 qui y est maintenue entre un épaulement 142 ménagé à l'intérieur du bouchon 14 et un épaulement 114 de l'écrou moleté 110. Cette bague intérieure 141 est conçue pour être solidarisée à l'extrémité du dispositif de perçage à solidariser au dispositif de solidarisation.

La deuxième portion 101 est traversée latéralement par des lumières 1010 qui permettent l'évacuation des copeaux au cours d'une opération de perçage.

L'extrémité postérieure de la deuxième portion 101 présente une partie filetée 1011 sur laquelle est vissé un écrou 15 à trous transversaux 150 pour permettre l'introduction d'une clé à ergot afin d'assurer le serrage de l'écrou 15 sur le corps 10.

L'écrou 15 comprend une butée 151 définissant une surface d'appui destinée à venir en appui contre la surface 132 de la grille 13 orientée vers le dispositif de solidarisation lorsque celui-ci est solidarisé à la grille 13.

Le moyeu expansible à billes comprend notamment :
- une bague expansible 120 ;
- un cône d'expansion 121 logé à l'intérieur de la bague expansible 120 ;
- des moyens d'entrainement en translation 122 du cône d'expansion 121 à l'intérieur de la bague d'expansion 120 ;
- des billes de verrouillage 123 ;
- une bague de guidage 124.

La bague expansible 120 comprend une portion 1200 au contour extérieur essentiellement cylindrique prolongée à l'une de ses extrémités par un épaulement 1201 présentant un méplat (non représenté). Cet épaulement 1201 est logé à l'intérieur d'un alésage 1012 ménagé à l'extrémité postérieure de la deuxième portion 101 du corps et présentant un méplat 1013 de forme complémentaire du méplat de la bague expansible 120. La bague expansible 120 est solidarisée au corps 10 au moyen de l'écrou 15 qui assure son blocage en translation vis-à-vis du corps 10. La bague expansible 120 est bloquée en rotation vis-à-vis du corps 10 par les méplats.

Des fentes longitudinales 1204 sont ménagées longitudinalement à la périphérie de la portion 1200 de la bague expansible 120 de sorte à permettre à la bague expansible de s'expandre et de se rétracter comme il ressortira plus clairement par la suite.

La bague expansible 120 est traversée par un alésage conique 1202 (ou plus exactement tronconique) ménagé le long d'un axe longitudinal de la bague expansible. L'angle de l'alésage 1202 est tel que l'alésage conique 1202 présente une extrémité de faible diamètre du côté du corps 10 et une extrémité de plus fort diamètre à l'opposée.

L'extrémité postérieure de la bague expansible 120 est traversée par des orifices radiaux 1203 ménagés selon des axes perpendiculaires à l'axe longitudinal de la bague expansible 120 et répartis de manière uniforme autour de cet axe longitudinal.

L'alésage conique 1202 de la bague expansible 120 loge le cône d'expansion 121. Le cône d'expansion 121 présente un contour périphérique extérieur de forme complémentaire du contour périphérique intérieur de l'alésage conique 1202.

Le cône d'expansion 121 est monté mobile en translation à l'intérieur de l'alésage conique 1202 selon l'axe longitudinal de celui-ci.

Des rainures longitudinales 1210 sont ménagées à la surface du cône d'expansion 121.

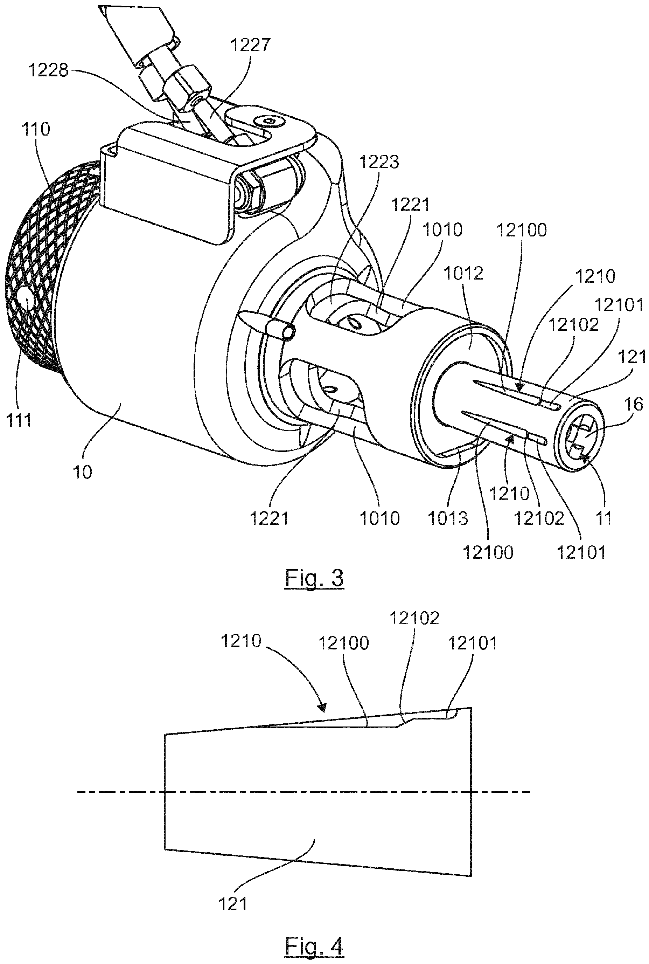

Ainsi que cela est visible sur la figure 4, ces rainures 1210 sont étagées. Elles comprennent chacune un premier étage 12100 et un deuxième étage 12101 séparés par une rampe inclinée 12102. Le fond de chaque étage s'étend essentiellement parallèlement à l'axe longitudinal du cône d'expansion 121. Le fond du premier étage 12100 est plus proche de l'axe longitudinal du cône d'expansion que le fond du deuxième étage 12101.

Les rainures 1210 sont préférentiellement non débouchantes, c'est-à-dire qu'elles ne sont pas ouvertes sur l'extérieur à l'extrémité postérieure du cône d'expansion 121.

Chaque rainure 1210 loge une bille de verrouillage 123.

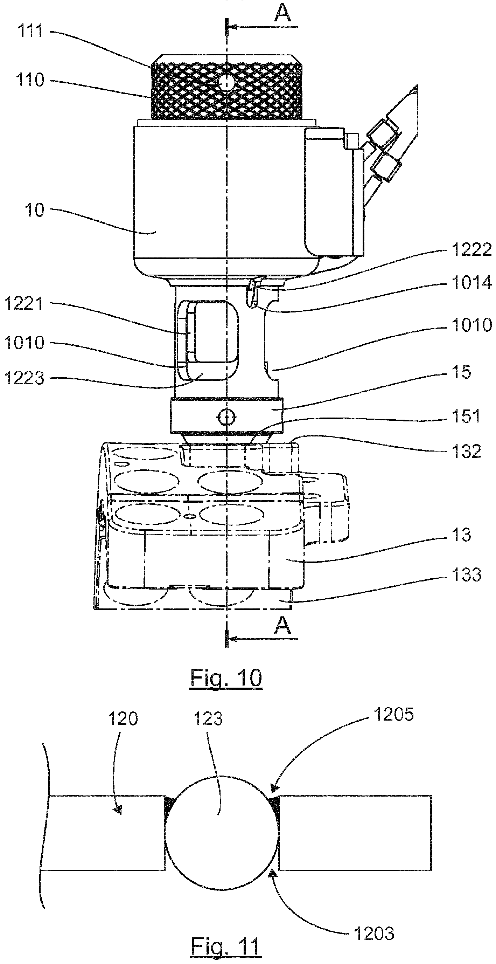

Les rainures 1210 sont alignées par rapport aux orifices 1203 pour permettre à chaque bille 123 de passer à travers un orifice 1203. Le diamètre extérieur de chaque orifice 1203 est légèrement resserré pour empêcher la bille 123 qui s'y trouve logée d'en sortir complètement. Pour cela, le diamètre extérieur de chaque orifice 1203 peut par exemple présenter un écrouissage 1205 formant saillie à l'intérieur de l'orifice tel que cela est représenté à la figure 11. Une autre solution pourrait bien entendu être mise en œuvre. Ce diamètre est choisi pour mettre à la bille 123 qui s'y trouve logée de former saillie à la surface extérieure de la bague expansible 120.

Le cône d'expansion 121 est solidarisé à l'extrémité de la tige creuse 1223 d'un vérin permettant de déplacer en translation de cône d'expansion 121 à l'intérieur de l'alésage conique 1202.

La tige 1223 est traversée par des lumières périphériques 1221 permettant l'évacuation de copeaux au cours d'une opération de perçage. Ces lumières 1221 s'étendent en regard des lumières 1010 ménagées dans le corps 10.

L'axe longitudinal de la tige 1223 du vérin s'étend co-axialement avec le canon de perçage.

La tige 1223 porte des goupilles transversales 1222 qui sont chacune logée dans une rainure longitudinale 1014 ménagée à cet effet dans le corps 10. Les goupilles 1222 et les rainures 1014 permettent de bloquer en rotation la tige 1223 par rapport au corps 10 et d'autoriser la translation de la tige 1223 dans le corps 10 le long de son axe longitudinal.

La tige 1223 porte un piston 1224 logé dans l'alésage 1220. Elle s'étend d'un côté du piston 1224 dans un alésage 1015 ménagé dans le corps 10 et débouchant dans l'alésage 1220. Elle s'étend de l'autre côté du piston 1224 dans un alésage 143 ménagé dans le bouchon 14.

Les alésages 1015 et 143 présentent chacun une rainure périphérique 1016, 144 logeant un joint torique 1017, 145 permettant d'assurer, avec le joint 140, l'étanchéité de l'alésage 1220 qui constitue le cylindre d'un vérin à l'intérieur duquel le piston 1224 est monté mobile en translation.

Le piston 1224 délimite à l'intérieur du cylindre 1220 une chambre de verrouillage 12201 et une chambre de libération 12202.

La surface de la face du piston située dans la chambre de déverrouillage est supérieure à la surface de la face dudit piston située dans ladite chambre de verrouillage.

Ceci permet, au cours du déverrouillage du moye expansible, de contrer l'effet du grippage du cône d'expansion dans la bague expansible.

Le corps 10 est traversé par un canal de verrouillage 1225 et par un canal de libération 1226 débouchant respectivement dans la chambre de verrouillage 12201 et dans la chambre de libération 12202 et permettant d'alimenter celles-ci en fluide sous pression.

Le canal de verrouillage 1225 et le canal de libération 1226 sont respectivement reliés à une conduite de verrouillage 1227 et une conduite de libération 1228 destinées à être reliées à des moyens d'alimentation en fluide sous pression.

La bague de guidage 124 est traversée par un alésage intérieur 1240 à l'intérieur duquel est ménagé un logement intérieur périphérique de blocage 1241 se présentant sous la forme d'une gorge. Elle présente un contour extérieur cylindrique prolongé par un épaulement 1242.

La bague de guidage 124 est destinée à être insérée à l'intérieur d'un alésage de positionnement 131 de la grille de perçage 13. Pour cela, chaque alésage de positionnement 131 comprend deux portions intérieures alésées 1310, 1311 de diamètres différents à l'interface desquelles un épaulement 1312 est formé. L'épaulement 1312 est formé du côté de la grille de perçage 13 situé à l'opposé du côté contre lequel la butée 151 est destinée à venir en appui. La bague de guidage 124 présente ainsi une forme extérieure complémentaire de la forme intérieure de l'alésage de positionnement 131.

Le cône d'expansion 121 est monté mobile en translation à l'intérieur de l'alésage conique 1202 de la bague expansible 120 selon son axe longitudinal entre au moins :
- une position de libération dans laquelle le cône 121 est déplacé du côté de plus fort diamètre de l'alésage conique 1202 de la bague expansible 120 si bien que celle-ci se trouve dans un état relâché dans lequel son diamètre extérieur est inférieur à celui des alésages intérieurs 1240 des bagues de guidage 124, si elles sont mises en œuvre, ou des alésages de positionnement 131 de la grille de perçage 13 dans le cas contraire, de sorte qu'elle puisse y être introduite ou en être extraite ;
- une position de verrouillage dans laquelle le cône 121 est déplacé du côté de plus faible diamètre de l'alésage conique 1202 de la bague expansible 120 si bien que celle-ci se trouve dans un état expansé dans lequel son diamètre extérieur est augmenté de sorte à maintenir le dispositif de solidarisation solidaire de la grille de perçage 13 par friction de la bague expansible 120 contre les parois internes de l'alésage intérieur 1240 de la bague de guidage 124 dans lequel elle se trouve lorsque des bagues de guidage 124 sont mises en œuvre, ou contre les parois internes de l'alésage de positionnement 131 de la grille 13 à l'intérieur duquel elle se trouve dans le cas contraire.

Lorsqu'une bague de guidage 124 est mise en œuvre, son alésage intérieur constitue un alésage de positionnement.

Ainsi, qu'une bague de guidage 124 soit ou non mise en œuvre, la bague expansible 120 est destinée à être logée dans un alésage de positionnement (l'alésage de positionnement 131 de la grille ou l'alésage intérieur 1240 de la bague de guidage 124) solidaire de la grille de perçage 13. Bien entendu, compte le diamètre de l'alésage de positionnement, qu'il soit ménagé dans une bague de guidage ou directement dans la grille, sera déterminé en fonction de la capacité de la bague expansible à s'expandre.

Le vérin permet de déplacer le piston 1224 et le cône 121 solidaire de sa tige 1223 de l'une à l'autre de ses positions.

Le cône d'expansion 121 agit sur les billes de verrouillage 123 pour les placées dans :
- une position de déblocage, prise lorsque le cône 121 se trouve dans sa position de libération, dans laquelle elles ne forment pas saillie à la surface périphérique extérieure de la bague d'expansion 120 ;
- une position de blocage, prise lorsque le cône 121 se trouve dans sa position de verrouillage, dans laquelle elles forment saillie à la surface périphérique extérieure de la bague d'expansion 120 de sorte à pouvoir se loger dans le logement périphérique de blocage 1241 formé dans la bague de guidage 124 et solidaire de l'alésages de positionnement 131 dans lequel elle est logée (ou dans le cas où les bagues de guidage 124 ne sont pas mises en œuvre, dans un logement périphérique de blocage ménagé directement dans les alésages de positionnement 131.

Les billes 123 se trouvent contre le premier étage 12100 de la rainure 1210 correspondante dans la position de déblocage et contre le deuxième étage 12101 dans la position de blocage.

Le dispositif de solidarisation comprend des moyens de régulation des moyens d'entrainement en translation du cône d'expansion, c'est-à-dire du vérin. Ces moyens de régulation sont configurés de sorte que la vitesse de déplacement en translation imprimé au cône d'expansion par le vérin soit inférieure au cours de son passage de la position de libération à la position de blocage à celle au cours de son passage de la position de blocage à la position de libération.

Le dispositif de solidarisation est traversé de part en part par un canon de perçage 16 qui permet le déplacement en rotation et en translation d'une broche et de l'outil coupant solidarisé à son extrémité au cours d'une opération de perçage.

Un brise copeau 17 est placé à l'extrémité postérieure du canon de perçage 16.

### 6.2. Fonctionnement

Le fonctionnement d'un dispositif de solidarisation selon l'invention va à présent être décrit.

Un dispositif de solidarisation 1 selon l'invention est en premier lieu solidarisé à l'extrémité d'un dispositif de perçage.

Pour cela, un écrou moleté 110 est enfilé à l'extrémité du carter du dispositif de perçage puis une bague 141 est solidarisée à l'extrémité du carter dispositif de perçage de sorte à être immobile par rapport à celui-ci. Elle peut par exemple être emmanchée à force et/ou collée à l'extrémité du dispositif de perçage. Ainsi, l'écrou moleté 110 est maintenu solidaire du dispositif de perçage par la bague 141. Cet écrou est mobile en rotation par rapport au carter du dispositif de perçage, ainsi qu'en translation jusqu'à venir en appui contre la bague 141.

Le corps 10 du dispositif de solidarisation est rapproché de l'extrémité du dispositif de perçage de sorte à introduire la bague 141 jusqu'à ce qu'elle vienne en butée contre l'épaulement 142 du bouchon 14. Puis l'écrou moleté 110 est vissé sur la portion filetée 113 de forme complémentaire prévue à cet effet sur le bouchon 14 du dispositif de solidarisation jusqu'à ce que la bague 141 se trouve comprimée entre l'épaulement 142 du bouchon 14 et l'épaulement 114 de l'écrou moleté 110. Le dispositif de solidarisation se trouve alors fixé au dispositif de perçage de telle sorte qu'ils sont immobilisés l'un par rapport à l'autre.

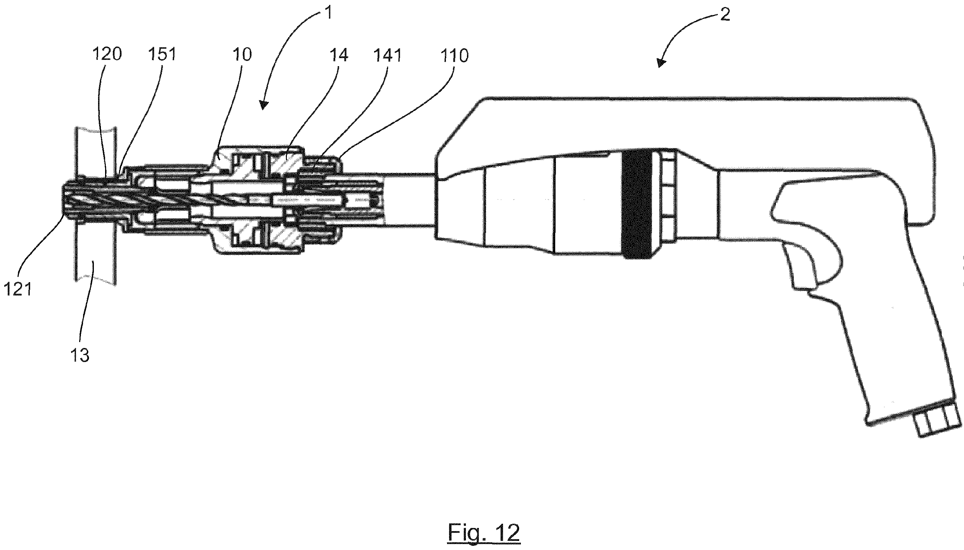

La figure 12 illustre un dispositif de solidarisation 1 fixé à l'extrémité d'un outil de perçage 2 représenté de manière partielle et schématique.

La broche du dispositif de perçage, ainsi éventuellement que l'outil coupant qui pourrait d'ores et déjà y être solidarisé, s'étend(ent) alors dans l'axe longitudinal du dispositif de solidarisation, le cas échéant en partie à l'intérieur du canon de perçage 16.

Les conduites de verrouillage 1227 et de libération 1228 sont ensuite raccordées au réseau d'alimentation en fluide sous pression, notamment en air comprimé, du dispositif de perçage.

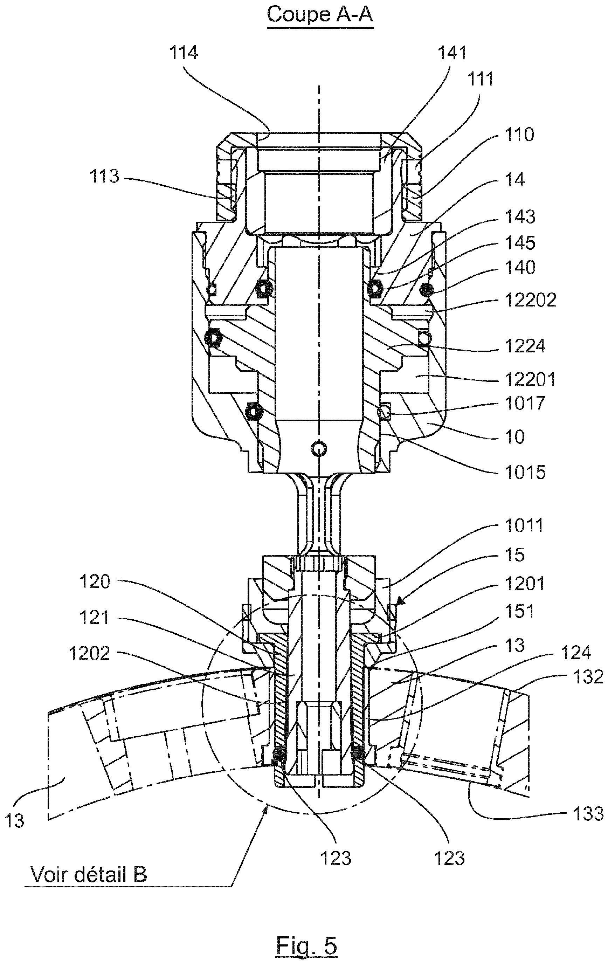

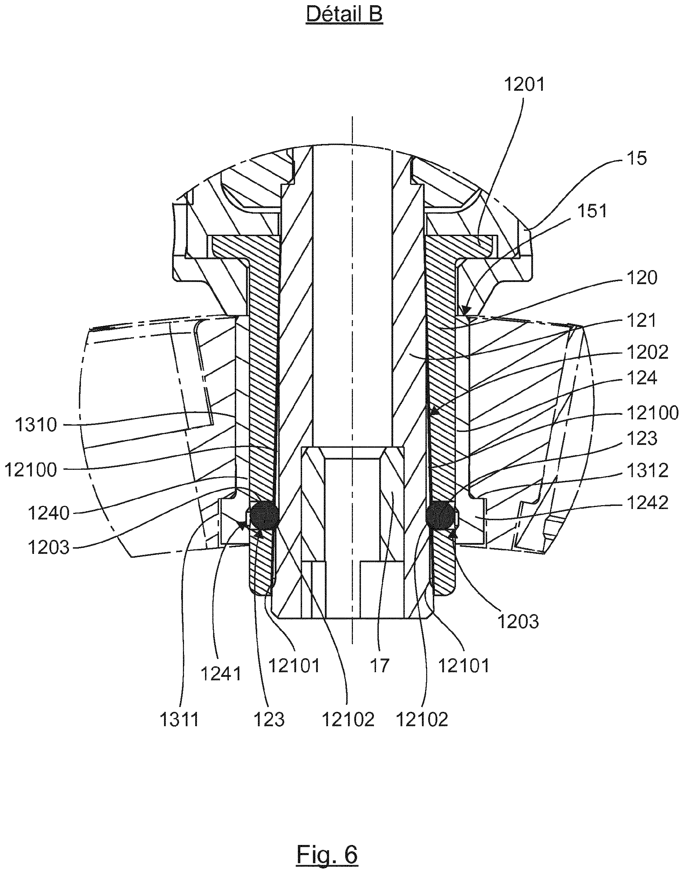

Le vérin est ensuite piloté de sorte à placer le cône d'expansion 121 dans sa position de libération, les billes de verrouillage 123 dans leur position de déblocage et la bague expansible 120 dans son état relâché s'ils ne se trouvaient pas dans cette position/état (cf. figures 5 et 6).

Pour cela, le fluide sous pression est introduit dans la chambre de libération 12202 via la conduite de libération 1228.

Sous l'effet de la pression dans la chambre de libération 12202, le piston 1224 se translate à l'intérieur du cylindre 1220 selon l'axe longitudinal du piston en direction de l'extrémité du dispositif de solidarisation 1 destinée à être solidarisée à une grille de perçage (cf. flèche D).

La tige 1223 du piston suit le déplacement en translation du piston 1224 si bien que le cône d'expansion 121 se translate par rapport à la bague expansible 120 pour se placer dans sa position de libération dans laquelle son extrémité de fort diamètre est éloignée de l'extrémité de fort diamètre de l'alésage conique 1202 de la bague expansible 120. Le cône d'expansion 121 n'agit ainsi pas sur la bague expansible 120. La bague expansible 120 se trouve alors dans son état relâché dans lequel son diamètre extérieur est inférieur au diamètre intérieur des alésages de positionnement 131 de la graille de perçage 13, ou des alésages intérieurs 1240 des bagues de guidage 124 lorsqu'elles sont mises en œuvre.

Au cours du déplacement du cône d'expansion 121 vers sa position de libération, les billes de verrouillage 123 roulent à la surface du cône d'expansion 121 dans leur rainure respective 1210 d'abord contre le deuxième étage 12101, puis contre la rampe inclinée 12102, pour venir au contact du premier étage 12100.

Au cours de ce déplacement, les billes de verrouillage 123 se déplacent librement en translation à l'intérieur des orifices radiaux 1203, le long de leur axe longitudinal, jusqu'à se placer dans leur position de déblocage dans laquelle elles ne forment pas saillie à la surface de la bague expansible 120.

Les bagues de guidage 124 sont le cas échéant introduites à force dans les alésages de positionnement 131 de la grille de perçage 13, depuis la face 133 de la grille orientée du côté de l'élément à percer, jusqu'à ce que leur épaulement 1242 vienne en appuis contre l'épaulement 1312 de l'alésage de positionnement 131 correspondant.

L'extrémité de chaque bague de positionnement 124 orientée du côté de la surface 132 de la grille contre laquelle la butée 151 est destinée à venir en appui forme alors légèrement saillie à cette surface de quelques dixième de millimètre.

Le dispositif de perçage et le dispositif de solidarisation qui y est fixé sont ensuite déplacés de sorte à introduire la bague expansible 120 dans l'alésage intérieur 1240 de la bague de guidage 124 de la grille de perçage correspondant à l'emplacement auquel il est souhaité de pratiquer un perçage, jusqu'à ce que la butée 151 se trouve en appui contre la bague de guidage 124 si de telles bagues sont mises en œuvre ou contre la surface 132 de la grille de perçage 13 orientée du côté de l'outil de perçage, c'est-à-dire du côté opposé au côté de la grille orienté vers l'élément à percer. Ce déplacement peut être réalisé manuellement par un opérateur ou au moyen d'un bras manipulateur (bras robot) si le dispositif de perçage est solidarisé à l'extrémité d'un tel bras.

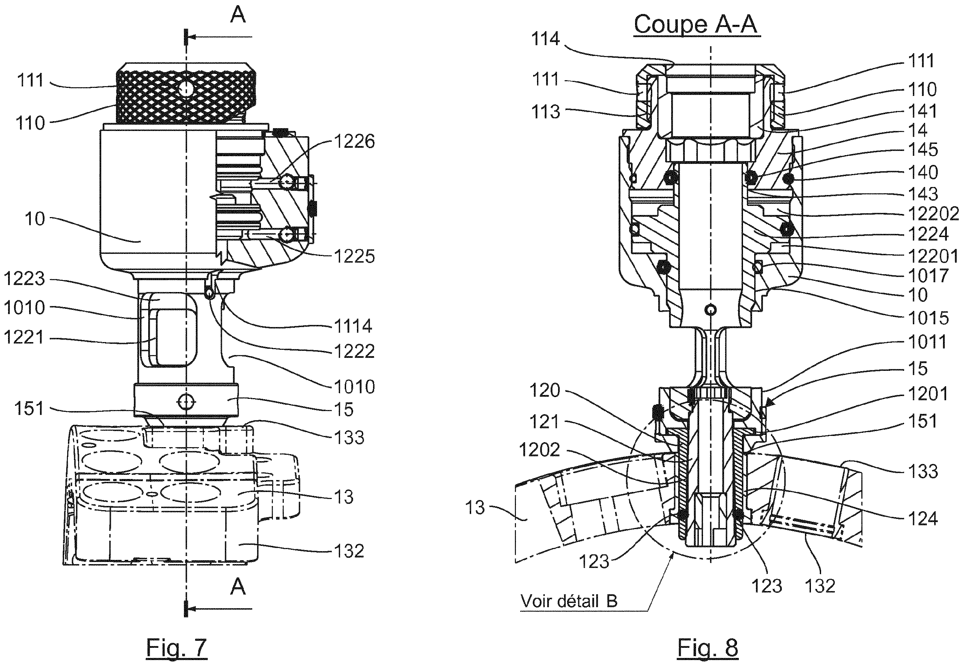

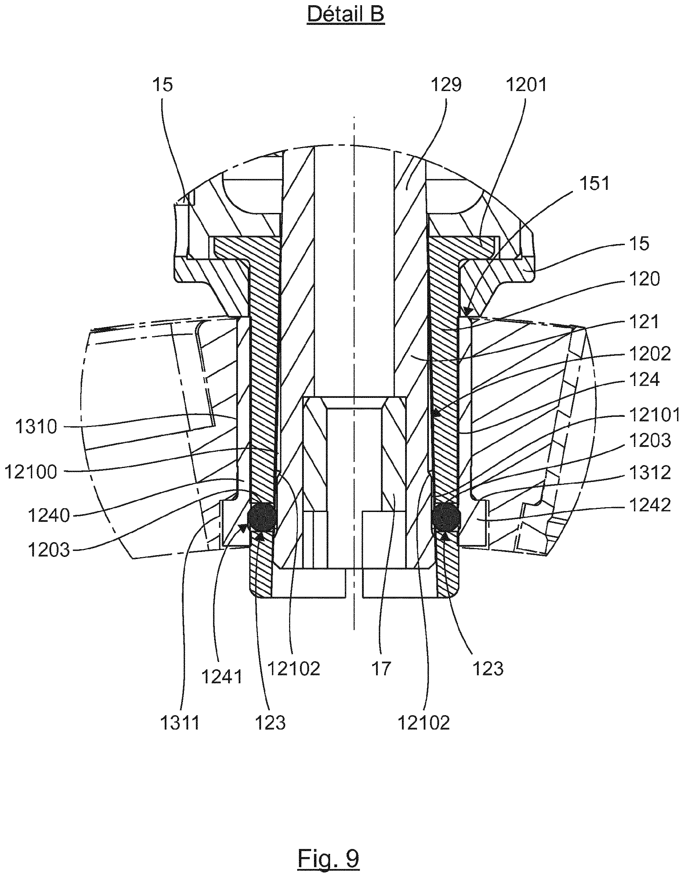

Du fluide sous pression est ensuite admis via la conduite de verrouillage 1127 dans la chambre de verrouillage 12201 pour placer le cône d'expansion 121 dans sa position de verrouillage, la bague expansible dans son état expandu et les billes de verrouillage 123 dans leur position de blocage (cf. figures 8 et 9).

Sous l'effet de la pression dans la chambre de verrouillage 12201, le piston 1224 se translate à l'intérieur du cylindre 1220 selon l'axe longitudinal du piston en direction de l'extrémité du dispositif de solidarisation destinée à être solidarisée à un dispositif de perçage (cf. flèche V).

La tige 1223 du piston suit le déplacement en translation du piston 1224 si bien que le cône d'expansion 121 se translate par rapport à la bague expansible 120 pour se placer dans sa position de verrouillage dans laquelle son extrémité de fort diamètre est rapprochée de l'extrémité de fort diamètre de l'alésage conique 1202 de la bague expansible 120. Le cône d'expansion 121 agit ainsi sur la bague expansible 120. La bague expansible 120 se trouve alors dans son état expansé dans lequel son diamètre extérieur est augmenté jusqu'à ce que la bague expansible 120 vienne se comprimer contre l'alésage intérieur 1240 de la bague de guidage 124 correspondante ou contre la paroi intérieure de l'alésage de positionnement de la grille si aucune bague de guidage n'est mise en œuvre.

Le dispositif de solidarisation est ainsi maintenu solidaire de la grille de perçage sous l'effet de la friction entre la bague expansible et la bague de guidage ou le cas échéant l'alésage de positionnement.

Au cours du déplacement du cône d'expansion 121 vers sa position de verrouillage, les billes de verrouillage 123 roulent à la surface du cône d'expansion 121 dans leur rainure respective 1210 d'abord contre le premier étage 12100, puis contre la rampe inclinée 12102, pour venir au contact du deuxième étage 12101.

Au cours de ce déplacement, les billes de verrouillage 123 se déplacent en translation à l'intérieur des orifices radiaux 1203, le long de leur axe longitudinal, jusqu'à se placer dans leur position de blocage dans laquelle elles forment saillie à la surface de la bague expansible 120 si bien qu'elles sont introduites dans le logement intérieur périphérique de blocage 1241 de la bague de guidage 124 correspondante ou directement formé dans l'alésage de positionnement correspondant si aucune bague de guidage n'est mise en œuvre.

Les billes de verrouillage 123 associées au logement intérieur périphérique de blocage 1241, permettent d'assurer un blocage en translation du dispositif de solidarisation par rapport à la grille de perçage, et ainsi d'éviter tout déplacement en translation du dispositif de perçage par rapport à la grille le long de l'axe de perçage au cours d'une opération de perçage.

En outre, l'introduction des billes de verrouillage 123 dans le logement intérieur périphérique de blocage 1241 de la bague de guidage 124 tend à induire un effort de compression de l'épaulement 1242 de la bague de guidage 124 contre l'épaulement 1312 de la grille de perçage, ainsi qu'un effort de compression de l'extrémité de la bague de guidage 124 contre la butée 151.

On garantit ainsi la possibilité de réaliser des perçages successifs avec une très bonne répétabilité en terme de profondeur de perçage.

Une telle solidarisation ne nécessite pas d'alimenter le vérin avec une pression très élevée. Une pression de l'ordre de 6 bars environ est suffisante.

Une opération de perçage peut ensuite être lancée. Au cours d'une telle opération de perçage, la broche ainsi que l'outil coupant placé à son extrémité se déplacent en translation et en rotation selon un même axe à l'intérieur du canon de perçage 16.

Un brise copeaux 17, placé optionnellement à l'extrémité du canon de perçage 16, permet de briser le copeau formé au cours du perçage et de le guide à l'intérieur du canon de perçage en direction des lumières 1221 et 1010 formées respectivement dans la tige 1223 et dans le corps 10 afin d'être évacués.

Une buse d'aspiration 18 aura pu être préalablement être solidarisée au corps 10 en regard des lumières 1221 et 1010 pour aspirer les copeaux et les évacuer vers une zone de stockage et/ou de traitement.

Une bague de protection 19, traversée par des lumières périphériques 190, aura optionnellement pu être interposée entre le corps 10 et la buse d'aspiration 18, pour éviter qu'un opérateur ne puisse introduire les doigts dans les lumières 1221 et 1010.

Une fois l'opération de perçage achevée, la chambre de déverrouillage 12202 est de nouveau mise sous pression avec de fluide comprimé pour générer le déverrouillage du dispositif selon la procédure décrite plus haut.

L'admission du fluide comprimé dans le vérin est régulée de manière telle que la vitesse du piston pour se déplacer vers sa position de verrouillage est plus élevée que celle pour se déplacer vers sa position de libération. Ceci permet de garantir que l'outil coupant soit sorti de la grille de perçage avant que le dispositif de désolidarisation ne puisse être désolidarisé de la grille de perçage. On évite ainsi de casser l'outil coupant lors de la désolidarisation du dispositif de perçage.

Le raccordement des conduites 1227, 1228 se fait préférentiellement en aval de la gâchette d'actionnement ou de la vanne d'actionnement permettant d'alimenter le moteur du dispositif de perçage lorsqu'une opération de perçage est activée.

De cette façon, le démarrage d'une opération de perçage est synchronisé avec le verrouillage du dispositif de solidarisation de sorte à garantir que l'opération de perçage commence après solidarisation du dispositif de perçage, et inversement.

### 6.3. Variante

Les billes de verrouillage constituent des moyens de blocage en translation du dispositif de solidarisation par rapport à la grille selon l'axe de perçage.

Dans une variante, le sens de déplacement du cône d'expansion pour passer de sa position de libération à sa position de verrouillage pourra être inversée. Dans ce cas, il passera de sa position de libération à sa position de verrouillage en étant translaté en direction de la surface de la grille de perçage orientée vers l'élément à percer.

Au cours de leur passage de leur position de déblocage à leur position de blocage, les billes pourront en premier lieu venir au contact du bord du logement périphérique de blocage orienté vers le dispositif de perçage. Les billes viendront ainsi se loger dans le logement périphérique de blocage en générant un effort axial ayant tendance à comprimer la butée contre la grille ou la bague de guidage.

De manière alternative, les billes pourront directement se loger dans logement périphérique de blocage sans générer d'effort axial.

## Revendications

1. Dispositif de solidarisation (1) d'un dispositif de perçage (2) à une grille de perçage (13) munie d'une pluralité d'alésages de positionnement (131), ledit dispositif de solidarisation (1) comprenant :
- un corps (10) ;
- des premiers moyens de solidarisation (11) dudit corps (10) audit dispositif de perçage (2) ;
- des deuxièmes moyens de solidarisation (12) dudit corps (10) à ladite grille de perçage (13), lesdits deuxièmes moyens de solidarisation (12) comprenant un moyeu expansible, ledit moyeu expansible comprenant :
- une bague expansible (120) traversée par un alésage conique (1202) ménagé le long d'un axe longitudinal de ladite bague expansible (120) ;
- un cône d'expansion (121) logé à l'intérieur dudit alésage conique de ladite bague expansible (120) et dont le contour périphérique extérieur est complémentaire dudit alésage conique (1202),
- des moyens d'entrainement en translation (122) dudit cône d'expansion (121) à l'intérieur dudit alésage conique (1202) selon ledit axe longitudinal entre au moins :
- une position de libération dans laquelle ledit cône (121) est déplacé du côté de plus fort diamètre dudit alésage conique (1202) de ladite bague expansible (120) si bien que celle-ci se trouve dans un état relâché dans lequel son diamètre extérieur est inférieur à celui desdits alésages de positionnement (131) de sorte qu'elle puisse y être introduite ou en être extraite ;
- une position de verrouillage dans laquelle ledit cône (121) est déplacé du côté de plus faible diamètre dudit alésage conique (1202) de ladite bague expansible (120) si bien que celle-ci se trouve dans un état expansé dans lequel son diamètre extérieur est augmenté de sorte à maintenir ledit dispositif de solidarisation (1) solidaire de ladite grille de perçage (13) par friction de ladite bague expansible (120) contre les parois internes d'un desdits alésages de positionnement (131),
**caractérisé en ce que** ledit moyeu expansible comprend en outre des billes de verrouillage (123) chacune logée dans un orifice (1203) ménagé dans ladite bague d'expansion (120), ledit cône d'expansion (121) agissant sur lesdites billes de verrouillage (123) pour les placer dans :
- une position de déblocage, prise lorsque ledit cône (121) se trouve dans sa position de libération, dans laquelle elles ne forment pas saillie à la surface périphérique extérieure de ladite bague expansible (120) ;
- une position de blocage, prise lorsque ledit cône (121) se trouve dans sa position de verrouillage, dans laquelle elles forment saillie à la surface périphérique extérieure de ladite bague expansible (120) de sorte à pouvoir se loger dans un logement périphérique de blocage (1241) solidaire desdits alésages de positionnement (131).

2. Dispositif selon la revendication 1 dans lequel lesdites billes (123) sont logées dans des rainures longitudinales (1210) ménagées à la surface dudit cône d'expansion (121).

3. Dispositif selon la revendication 2 dans lequel chacune desdites rainures (1210) comprend un premier étage (12100) et un deuxième étage (12101) séparés par une rampe inclinée (12102), le fond dudit premier étage (12100) étant plus proche de l'axe longitudinal dudit cône d'expansion (121) que le fond dudit deuxième étage (12101), lesdites billes (131) se trouvant contre ledit premier étage (12100) dans ladite position de déblocage et contre ledit deuxième étage (12101) dans ladite position de blocage.

4. Dispositif selon la revendication 3 dans lequel lesdites rainures (1210) sont non débouchantes.

5. Dispositif de solidarisation selon l'une quelconque des revendications 1 à 4 dans lequel lesdits alésages de positionnement (131) sont ménagés dans ladite grille de perçage (13).

6. Dispositif de solidarisation selon l'une quelconque des revendications 1 à 4 comprenant des bagues de guidage (124) destinées à être solidarisées à ladite grille de perçage (13) et traversées par lesdits alésage de positionnement (131).

7. Dispositif de solidarisation selon la revendication 5 ou 6 dans lequel lesdits logements périphériques de blocage (1241) sont ménagés dans ladite grille (13) ou dans lesdites bagues de guidage (124).

8. Dispositif de solidarisation selon l'une quelconque des revendications 1 à 7 dans lequel ledit corps (10) comprend une butée (151) destinée en venir en appui contre une surface de ladite grille de perçage (13) ou contre une surface desdites bagues de guidage (124) orientée vers ledit dispositif de solidarisation (1).

9. Dispositif de solidarisation selon la revendication 6 ou selon la revendication 6 et l'une quelconque des revendications 7 et 8 dans lequel ladite bague de guidage (124) comprend un épaulement (1242) de forme complémentaire d'un logement (1311) ménagé dans lesdits alésages de positionnement (131) de ladite grille (13).

10. Dispositif selon les revendications 9 dans lequel ledit épaulement (1242) est ménagé du côté de ladite grille (13) opposé à celui orientée vers ledit dispositif de solidarisation (1).

11. Dispositif selon l'une quelconque des revendication 1 à 10 dans lequel le passage dudit cône (121) de sa position de libération à sa position de verrouillage se fait en direction de la surface (132) de ladite grille de perçage (13) orientée vers ledit dispositif de solidarisation (1), ou inversement.

12. Dispositif selon l'une quelconque des revendications 1 à 11 dans lequel lesdits moyens d'entrainement en translation (122) dudit cône d'expansion (121) comprennent un vérin (1123, 1224, 1220), ledit vérin comprenant un cylindre (1220) ménagé à l'intérieur dudit corps et un piston (1224) monté mobile en translation à l'intérieur dudit cylindre (1220) selon l'axe de translation dudit cône d'expansion (121), ledit cône d'expansion (121) étant solidaire en translation dudit piston (1224).

13. Dispositif selon la revendication 12 dans lequel ledit vérin (1123, 1224, 1220) est à double effet.

14. Dispositif selon la revendication 12 ou 13 dans lequel ledit cylindre (1220) dudit vérin comprend une chambre de verrouillage (12201) placé d'un côté du piston (1224) et destinée à être alimenté pour déplacer ledit cône d'expansion (121) dans sa position de verrouillage et une chambre de libération (12202) placé de l'autre côté du piston (1224) et destinée à être alimenté pour déplacer ledit cône d'expansion (121) dans sa position de libération, la surface de la face du piston (1224) située dans ladite chambre de libération (12202) étant supérieure à la surface de la face dudit piston (1224) située dans ladite chambre de verrouillage (12201) .

15. Dispositif selon l'une quelconque des revendications 1 à 14 comprenant des moyens de régulation desdits moyens d'entrainement en translation (122) dudit cône d'expansion (121), lesdits moyens de régulation étant configurés de sorte que la vitesse de déplacement en translation imprimé audit cône d'expansion (121) par lesdits moyens d'entrainement (122) soit supérieure au cours de son passage de ladite position de libération à ladite position de verrouillage à celle au cours de son passage de ladite position de verrouillage à ladite position de libération.

16. Dispositif de solidarisation selon l'une quelconque des revendications 1 à 15 traversé de part en part par un canon de perçage (16).

## Patentansprüche

1. Vorrichtung zur Verbindung (1) einer Bohrvorrichtung (2) mit einem Bohrgitter (13), das mit mehreren Positionierungsbohrungen (131) versehen ist, wobei die Vorrichtung zur Verbindung (1) umfasst:
- einen Körper (10);
- erste Mittel zur festen Verbindung (11) des Körpers (10) mit der Bohrvorrichtung (2);
- zweite Mittel zur festen Verbindung (12) des Körpers (10) mit dem Bohrgitter (13), wobei die zweiten Mittel zur festen Verbindung (12) eine ausbaubare Nabe umfassen, wobei die ausbaubare Nabe umfasst:
- eine Spreizhülse (120), die von einer konischen Bohrung (1202) durchquert wird, die entlang einer Längsachse der Spreizhülse (120) ausgebildet ist;
- einen Spreizkegel (121), der im Inneren der konischen Bohrung der Spreizhülse (120) aufgenommen ist und dessen äußere Umfangskontur zu der konischen Bohrung (1202) komplementär ist,
- Mittel zum translatorischen Antrieb (122) des Spreizkegels (121) im Inneren der konischen Bohrung (1202) entlang der Längsachse zwischen wenigstens:
- einer Freigabeposition, in welcher der Spreizkegel (121) zur Seite des größeren Durchmessers der konischen Bohrung (1202) der Spreizhülse (120) verschoben ist, so dass diese sich in einem gelösten Zustand befindet, in welchem ihr Außendurchmesser kleiner als derjenige der Positionierungsbohrungen (131) ist, so dass sie in diese eingeführt oder aus ihnen herausgezogen werden kann;
- einer Verriegelungsposition, in welcher der Spreizkegel (121) zur Seite des kleineren Durchmessers der konischen Bohrung (1202) der Spreizhülse (120) verschoben ist, so dass diese sich in einem gespreizten Zustand befindet, in welchem ihr Außendurchmesser vergrößert ist, so dass die Vorrichtung zur Verbindung (1) mit dem Bohrgitter (13) durch Reibung der Spreizhülse (120) an den Innenwänden einer der Positionierungsbohrungen (131) fest verbunden gehalten wird,
**dadurch gekennzeichnet, dass** die ausbaubare Nabe außerdem Verriegelungskugeln (123) umfasst, die jeweils in einer Öffnung (1203) aufgenommen sind, die in der Spreizhülse (120) ausgebildet ist, wobei der Spreizkegel (121) auf die Verriegelungskugeln (123) einwirkt, um sie anzuordnen:
- in einer Blockadposition, die eingenommen wird, wenn sich der Spreizkegel (121) in seiner Freigabeposition befindet, und in welcher sie nicht über die äußere Umfangsfläche der Spreizhülse (120) hinausragen;
- in einer Unblockadposition, die eingenommen wird, wenn sich der Spreizkegel (121) in seiner Verriegelungsposition befindet, und in welcher sie über die äußere Umfangsfläche der Spreizhülse (120) hinausragen, so dass sie in einer umlaufenden Sperraufnahme (1241) aufgenommen werden können, die mit den Positionierungsbohrungen (131) fest verbunden ist.

2. Vorrichtung nach Anspruch 1, wobei die Kugeln (123) in Längsnuten (1210) aufgenommen sind, die an der Oberfläche des Spreizkegels (121) ausgebildet sind.

3. Vorrichtung nach Anspruch 2, wobei jede der Nuten (1210) eine erste Stufe (12100) und eine zweite Stufe (12101) umfasst, die durch eine geneigte Rampe (12102) getrennt sind, wobei der Boden der ersten Stufe (12100) der Längsachse des Spreizkegels (121) näher ist als der Boden der zweiten Stufe (12101), wobei sich die Kugeln (131), wenn sie an der ersten Stufe (12100) anliegen, in der Blockadposition, und wenn sie an der zweiten Stufe (12101) anliegen, in der Unblockadposition befinden.

4. Vorrichtung nach Anspruch 3, wobei die Nuten (1210) nicht durchgang sind.

5. Vorrichtung zur festen Verbindung nach einem der Ansprüche 1 bis 4, wobei die Positionierungsbohrungen (131) in dem Bohrgitter (13) ausgebildet sind.

6. Vorrichtung zur festen Verbindung nach einem der Ansprüche 1 bis 4, welche Führungshülsen (124) umfasst, die dazu bestimmt sind, mit dem Bohrgitter (13) fest verbunden zu werden, und von den Positionierungsbohrungen (131) durchquert werden.

7. Vorrichtung zur festen Verbindung nach Anspruch 5 oder 6, wobei die umlaufenden Sperraufnahmen (1241) in dem Bohrgitter (13) oder in den Führungshülsen (124) ausgebildet sind.

8. Vorrichtung zur festen Verbindung nach einem der Ansprüche 1 bis 7, wobei der Körper (10) einen Anschlag (151) umfasst, der dazu bestimmt ist, an einer Fläche des Bohrgitters (13) oder an einer Fläche der Führungshülsen (124) zur Anlage zu kommen, die der Vorrichtung zur Verbindung (1) zugewandt ist.

9. Vorrichtung zur festen Verbindung nach Anspruch 6 oder nach Anspruch 6 und einem der Ansprüche 7 und 8, wobei die Führungshülse (124) einen Bund (1242) von einer Form umfasst, die zu einer in den Positionierungsbohrungen (131) des Bohrgitters (13) ausgebildeten Aufnahme (1311) komplementär ist.

10. Vorrichtung nach Anspruch 9, wobei der Bund (1242) auf der Seite des Bohrgitters (13) ausgebildet ist, die zu derjenigen, die der Vorrichtung zur Verbindung (1) zugewandt ist, entgegengesetzt ist.

11. Vorrichtung nach einem der Ansprüche 1 bis 10, wobei der Wechsel des Kegels (121) von seiner Freigabeposition zu seiner Verriegelungsposition in Richtung der Fläche (132) des Bohrgitters (13), die der Vorrichtung zur festen Verbindung (1) zugewandt ist, oder umgekehrt erfolgt.

12. Vorrichtung nach einem der Ansprüche 1 bis 11, wobei die Mittel zum translatorischen Antrieb (122) des Spreizkegels (121) einen Stellantrieb (1123, 1224, 1220) umfassen, wobei der Stellantrieb einen Zylinder (1220), der im Inneren des Körpers ausgebildet ist, und einen Kolben (1224), der im Inneren des Zylinders (1220) translatorisch beweglich entlang der Translationsachse des Spreizkegels (121) angebracht ist, umfasst, wobei der Spreizkegel (121) mit dem Kolben (1224) verschiebefest verbunden ist.

13. Vorrichtung nach Anspruch 12, wobei der Stellantrieb (1123, 1224, 1220) doppeltwirkend ist.

14. Vorrichtung nach Anspruch 12 oder 13, wobei der Zylinder (1220) des Stellantriebs eine Verriegelungskammer (12201), die auf einer Seite des Kolbens (1224) angeordnet ist und dazu bestimmt ist, beaufschlagt zu werden, um den Spreizkegel (121) in seine Verriegelungsposition zu verschieben, und eine Freigabekammer (12202), die auf der anderen Seite des Kolbens (1224) angeordnet ist und dazu bestimmt ist, beaufschlagt zu werden, um den Spreizkegel (121) in seine Freigabeposition zu verschieben, umfasst, wobei die Fläche der Seite des Kolbens (1224), die sich in den Freigabekammer (12202) befindet, größer als die Fläche der Seite des Kolbens (1224) ist, die sich in den Verriegelungskammer (12201) befindet.

15. Vorrichtung nach einem der Ansprüche 1 bis 14, welche Regelungsmittel für die Mittel zum translatorischen Antrieb (122) des Spreizkegels (121) umfasst, wobei die Regelungsmittel derart ausgelegt sind, dass die Geschwindigkeit der translatorischen Bewegung, die dem Spreizkegel (121) durch die Mittel zum translatorischen Antrieb (122) verliehen wird, bei seinem Wechsel von der Freigabeposition zur Verriegelungsposition höher ist als die bei seinem Wechsel von der Verriegelungsposition zur Freigabeposition.

16. Vorrichtung zur festen Verbindung nach einem der Ansprüche 1 bis 15, welche von einer Bohrbüchse (16) vollständig durchquert wird.

## Claims

1. A device for securing (1) a boring device (2) to a boring grate (13) provided with a plurality of positioning bores (131), said securing device (1) comprising:
- a body (10);
- first means (11) for securing said body (10) to said boring device (2);
- second means (12) for securing said body (10) to said boring grate (13), said second securing means (12) comprising an expandable hub, said expandable hub comprising:
- an expandable ring (120) traversed by a conical bore (1202) formed along a longitudinal axis of said expandable ring (120);
- an expansion cone (121) housed inside said conical bore of said expandable ring (120) and whose outer peripheral contour is complementary to said conical bore (1202),
- means for translating (122) said expansion cone (121) inside said conical bore (1202) along said longitudinal axis between at least:
- a release position wherein said cone (121) is moved to the side with the larger diameter of said conical bore (1202) of said expandable ring (120) so that the latter is in a released state wherein its outer diameter is smaller than that of said positioning bores (131) so that it can be inserted therein or extracted therefrom;
- a locking position wherein said cone (121) is moved to the side with the smaller diameter of said conical bore (1202) of said expandable ring (120) so that the latter is in an expanded state wherein its outer diameter is increased so as to maintain said securing device (1) secured to said boring grate (13) by friction of said expandable ring (120) against the internal walls of one of said positioning bores (131),
**characterised in that** said expandable hub further comprises locking balls (123) each housed in an orifice (1203) formed in said expandable ring (120), said expansion cone (121) acting on said locking balls (123) to place them in:
- an unblocking position, taken when said cone (121) is in its release position, wherein they do not protrude from the outer peripheral surface of said expandable ring (120);
- a blocking position, taken when said cone (121) is in its locking position, wherein they protrude from the outer peripheral surface of said expandable ring (120) so as to be able to be housed in a peripheral blocking housing (1241) secured to said positioning bores (131).

2. The device according to claim 1 wherein said balls (123) are housed in longitudinal grooves (1210) formed on the surface of said expansion cone (121).

3. The device according to claim 2 wherein each of said grooves (1210) comprises a first stage (12100) and a second stage (12101) separated by an inclined ramp (12102), the bottom of said first stage (12100) being closer to the longitudinal axis of said expansion cone (121) than the bottom of said second stage (12101), said balls (131) lying against said first stage (12100) in said unblocking position and against said second stage (12101) in said blocking position.

4. The device according to claim 3 wherein said grooves (1210) are blind.

5. The securing device according to any one of claims 1 to 4 wherein said positioning bores (131) are formed in said boring grate (13).

6. The securing device according to any one of claims 1 to 4 comprising guide rings (124) intended to be secured to said boring grate (13) and traversed by said positioning bore (131).

7. The securing device according to claim 5 or 6 wherein said peripheral blocking housings (1241) are formed in said grate (13) or in said guide rings (124).

8. The securing device according to any one of claims 1 to 7 wherein said body (10) comprises a stop (151) intended to bear against a surface of said boring grate (13) or against a surface of said guide rings (124) oriented towards said securing device (1).

9. The securing device according to claim 6 or according to claim 6 and any one of claims 7 and 8 wherein said guide ring (124) comprises a shoulder (1242) of shape complementary to a housing (1311) formed in said positioning bores (131) of said grate (13).

10. The device according to claims 9 wherein said shoulder (1242) is formed on the side of said grate (13) opposite to that oriented towards said securing device (1) .

11. The device according to any one of claims 1 to 10 wherein the switching of said cone (121) from its release position to its locking position is in the direction of the surface (132) of said boring grate (13) oriented towards said securing device (1), or vice versa.

12. The device according to any one of claims 1 to 11 wherein said means (122) for translating said expansion cone (121) comprise a actuator (1123, 1224, 1220), said actuator comprising a cylinder (1220) formed inside said body and a piston (1224) mounted movably in translation inside said cylinder (1220) along the axis of translation of said expansion cone (121), said expansion cone (121) being secured in translation with said piston (1224).

13. The device according to claim 12 wherein said actuator (1123, 1224, 1220) is a double-acting actuator.

14. The device according to claim 12 or 13 wherein said cylinder (1220) of said actuator comprises a locking chamber (12201) placed on one side of the piston (1224) and intended to be power supplied to move said expansion cone (121) in its locking position and a release chamber (12202) placed on the other side of the piston (1224) and intended to be power supplied to move said expansion cone (121) in its release position, the surface of the face of the piston (1224) located in said release chamber (12202) being greater than the surface of the face of said piston (1224) located in said locking chamber (12201) .

15. The device according to any one of claims 1 to 14 comprising means for regulating said means (122) for translating said expansion cone (121), said means for regulating being configured so that the speed of translational movement imparted to said expansion cone (121) by said means (122) for translating is greater when it is switched from said release position to said locking position than that when it is switched from said locking position to said release position.

16. The securing device according to any one of claims 1 to 15 through which a boring barrel (16) extends.
